Europäisches Patentamt

European Patent Office

Office européen des brevets

(11) Veröffentlichungsnummer: **0 320 813 B1**

# (12) EUROPÄISCHE PATENTSCHRIFT

(45) Veröffentlichungstag der Patentschrift: **09.09.92**

(21) Anmeldenummer: **88120590.0**

(22) Anmeldetag: **09.12.88**

(51) Int. Cl.⁵: **B01D 11/02**, C10C 3/08

---

(54) Verfahren zur kontinuierlichen Extraktion von hoch-bzw. nichtsiedenden aber schmelzenden organischen Stoffgemischen.

---

(30) Priorität: **18.12.87 DE 3743058**

(43) Veröffentlichungstag der Anmeldung:
**21.06.89 Patentblatt 89/25**

(45) Bekanntmachung des Hinweises auf die
Patenterteilung:
**09.09.92 Patentblatt 92/37**

(84) Benannte Vertragsstaaten:
**BE DE ES FR GB IT LU NL SE**

(56) Entgegenhaltungen:
**EP-A- 0 171 079**
**EP-A- 0 232 481**
**DE-A- 2 458 864**
**DE-B- 2 127 618**

**CHEMIE INGENIEUR TECHNIK, Band 53, Nr. 7,
Juli 1981, Seiten 529-542, Verlag Chemie
GmbH, Nürnberg, DE; G. BRUNNER et al.;
"Zum Stand der Extraktion mit komprimierten Gasen"**

(73) Patentinhaber: **Fried. Krupp AG
Altendorfer Strasse 103
W-4300 Essen 1(DE)**

(72) Erfinder: **Haeffner, Eckhard, Dr.-Ing.
Fingerhutweg 28
W-3392 Clausthal-Zellerfeld(DE)**
Erfinder: **Ben-Nasr, Hedi, Dr. rer. nat.
Friedhofstrasse 32
W-4650 Gelsenkirchen(DE)**
Erfinder: **Knuth, Bernd
Regenbogenweg 16
W-4300 Essen 1(DE)**
Erfinder: **Jasper, Hubert, Dipl.-Ing.
Markenkamp 21
W-4358 Haltern(DE)**
Erfinder: **Reimann, Klaus
Ernst-Tengelmann-Ring 1 c
W-4300 Essen 15(DE)**

---

EP 0 320 813 B1

**Beschreibung**

Die Erfindung bezieht sich auf ein Verfahren zur Aufarbeitung von hoch- bzw. nichtsiedenden aber schmelzenden organischen Stoffgemischen durch Extraktion mit überkritischen Lösungsmitteln.

In der DE-B 14 93 190 wird ein Verfahren zur Auftrennung von unter Verfahrensbedingungen flüssigen und/oder festen Stoffgemischen, die organische Verbindungen und/oder organische Gruppen aufweisende Verbindungen enthalten, mit Hilfe von überkritischen Gasen beschrieben. Danach lassen sich Feststoffe, wie Naphthalin, Phenanthren oder Anthracen, auch Naturstoffe, wie Kampfer oder Chlorophyll, in die überkritische Phase aufnehmen, wie unter den Verfahrensbedingungen flüssige Komponenten oder Stoffgemische.

In der DE-C 31 14 593 wird ein Verfahren zur Gewinnung von Aroma- und Farbstoffen aus Paprika mit einem überkritischen Lösungsmittel dargestellt. Als Lösungsmittel werden dort Kohlendioxyd, Äthan, Äthen und eine Mischung aus Äthan und Äthen angegeben.

In der DE-B 21 27 618 wird ein Verfahren zur Gewinnung von Hopfenextrakten durch Extraktion von lufttrockenem Hopfen mit einem überkritischen Lösungsmittel beschrieben.

Die EP-A 0 232 481 beschreibt ein Verfahren zur Herstellung von Steinkohlenteerpechrohstoffen, die durch Extraktion mit einem überkritischen Gas und einem Schleppmittel und durch stufenweise Druck- bzw. Temperaturveränderung aus der überkritischen Lösung gewonnen werden. Als besondere Lösungsmittel werden hier aliphatische Kohlenwasserstoffe mit zwei bis fünf Kohlenstoffatomen und olefinische Kohlenstoffe mit zwei bis fünf Kohlenstoffatomen sowie halogenhaltige Kohlenwasserstoffe mit eins bis vier Kohlenstoffatomen angegeben.

Aus Chemie Ingenieur Technik Band 53, 1981, Nr. 7, S. 529 - 542 "Zum Stand der Extraktion mit komprimierten Gasen" ist die Auftrennung eines Stoffgemisches durch überkritische Gasextraktion unter Verwendung eines Schleppmittels bekannt, bei der die Trennkolonne mit konstanter Temperatur arbeitet und das Sumpfprodukt kontinuierlich abgezogen wird.

Die bekannten Verfahren sind wegen der geringen Ausbeute im allgemeinen nicht hinreichend wirtschaftlich und nutzen die Rohstoffe nicht genügend aus.

Der Erfindung liegt daher die Aufgabe zugrunde, ein Verfahren zur Extraktion von hoch- bzw. nichtsiedenden aber schmelzenden organischen Stoffgemischen zu schaffen, welches eine höhere Ausbeute und eine einfache Ausbringung des Extraktionsrückstandes ermöglicht.

Die Aufgabe wird erfindungsgemäß dadurch gelöst, daß die Extraktionskolonne ein Temperaturprofil aufweist. Die Temperatur im Abtriebsteil der Kolonne wird so tief eingestellt, daß eine optimale Lösung der zu extrahierenden Komponenten im Lösungsmittel gewährleistet ist. Hierbei ist entsprechend der DE-B 14 93 190 zu berücksichtigen, daß die im überkritischen Lösungsmittel gelöste Stoffmenge um so größer ist, je mehr die Temperatur an der kritischen Temperatur liegt. Andererseits wird im Verstärkerteil der Kolonne die Temperatur so hoch eingestellt, daß sich aus dem Kolonnensumpf noch kontinuierlich pastöser Extraktionsrückstand abziehen läßt. Besonders vorteilhaft ist es, wenn die Erweichungstemperatur mindestens 120 °C beträgt, was durch Einstellung der Verfahrensparameter wie Lösungsmittelverhältnis, Temperatur und Druck erreicht werden kann.

Als Lösungsmittel haben sich generell bewährt $CO_2$, Propan, Butan, Pentan, Petroläther, Wasser oder ein Gemisch aus mindestens zwei dieser Lösungsmittel bei einer Temperatur T von $T > T_k$ ($T_k$ = kritische Temperatur) und einem Druck p von $p > p_k$ ($p_k$ = kritischer Druck), wobei $p < 400$ bar ist. Kohle und Erdölprodukte werden vorzugsweise mit Kohlenwasserstoffen mit drei bis fünf C-Atomen als überkritisches Lösungsmittel entweder in reiner Form oder als Gemisch extrahiert. Zur Gewinnung von Pflanzenextrakten werden vorteilhafterweise $CO_2$ und Propan eingesetzt.

Beispiele für hoch- bzw. nichtsiedende aber schmelzende Stoffgemische sind in der folgenden Aufstellung aufgeführt.

| Stoffgemisch | Erweichung- bzw. Schmelzpunkte (°C) | abzutrennende Inhaltsstoffe, die die Weiterverarbeitung stören |
|---|---|---|
| Steinkohlenteerpech | 71 | Asche, chinolin-unlösliche Bestandteile |
| Rückstände der primären Erdölverarbeitung | 30...80 | Asphaltstoffe, Porphyrine |
| Hydrierrückstände der Kohleverflüssigung | 40...90 | Asche, Katalysator, Asphaltstoffe |
| Hopfenextrakt | 30...60 | Gerbstoffe, Zucker, Hartharze, Chlorophyll |
| Rohmontanwachs | 70...95 | Harze, Asphaltstoffe |

In weiterer Ausgestaltung der Erfindung ist es vorteilhaft, dem Lösungsmittel bis zu 20 Gew.-% Schleppmittel, wie z.B. Toluol oder Äthanol zuzugeben Durch diese Maßnahme wird die Selektivität des Verfahrens erhöht und die Ausbeute verbessert.

Vorteilhafterweise wird der Extraktionskolonne in vielen Fällen Wasser zugesetzt, um das Ausschleusen des Extraktionsrückstandes zu erleichtern.

Wird Wasser als überkritisches Lösungsmittel verwendet, so ist es vorteilhaft, die beladene fluide Phase durch Temperatur- und Druckerniedrigung einstufig in einer zweiten Extraktionskolonne zu verflüssigen und den Extrakt on-line mit einem überkritischen Kohlenwasserstoff oder einem überkritischen Kohlenwasserstoffgemisch, vorzugsweise mit Propan, n-Butan, iso-Butan oder einem Gemisch aus diesen, zumindest teilweise wieder zu extrahieren und in nachgeschalteten Abscheidern fraktioniert abzuscheiden. Die Abscheidebedingungen können dabei so ausgewählt werden, daß die abgezogenen Fraktionen weitestgehend wasserfrei erhalten werden.

Bei der Verwendung von Wasser zur leichteren Ausschleusung des Extraktionsrückstandes aus der Kolonne ist es zur Erhöhung seiner Wirkung besonders vorteilhaft, wenn dem Wasser Stoffe zur Verbesserung der Benetzungsfähigkeit zugefügt werden.

Für die Reinheit der Fraktionen der nachgeschalteten Abscheider ist es besonders vorteilhaft, wenn die erste Fraktion in den Extraktionsprozeß zurückgeführt oder gesondert verarbeitet wird.

Bei der Extraktion von Pflanzenextrakten unter Verwendung des überkritischen Lösungsmittels $CO_2$ ist es für die Erhöhung der Selektivität des Verfahrens besonders vorteilhaft, wenn Propan, n-Butan, iso-Butan oder Äthanol als Schleppmittel zugesetzt wird.

Um die Wirtschaftlichkeit des Verfahrens wesentlich zu verbessern, wird das Lösungsmittel im Kreislauf gefahren.

Der Gegenstand der Erfindung wird nachfolgend anhand der Zeichnung sowie einiger Ausführungsbeispiele näher erläutert.

Es zeigen

Fig 1    ein beispielhaftes Verfahrensfließbild für die Extraktion eines hoch- bzw. nichtsiedenden organischen Stoffgemisches,

Fig. 2    ein beispielhaftes Verfahrensfließbild für die Extraktion eines hoch- bzw. nichtsiedenden organischen Stoffgemisches mit überkritischem Wasser mit nachgeschalteter zweiter Extraktionskolonne.

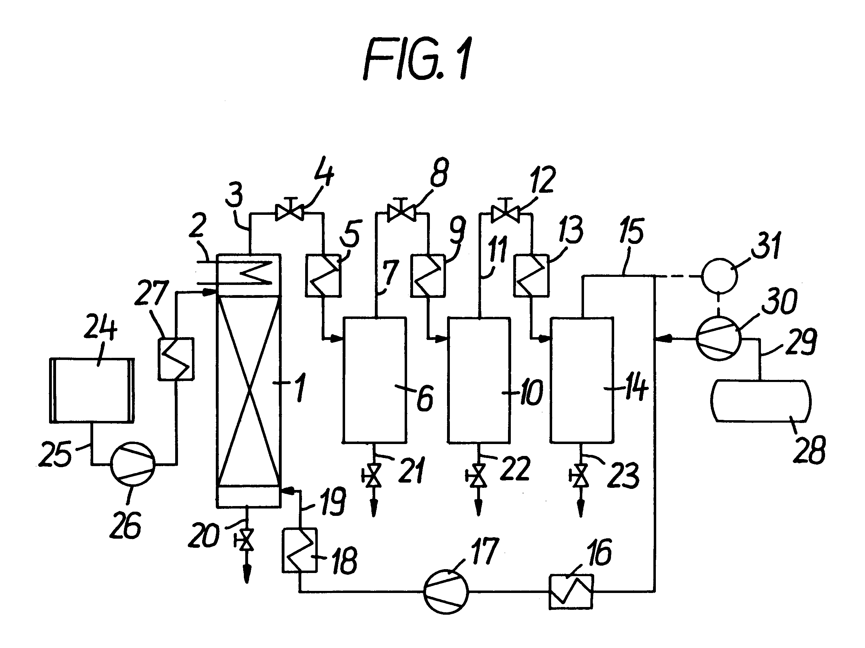

In Fig. 1 wird das Einsatzprodukt über Leitung 25 einem thermostatisierbaren Vorratsbehälter 24 entnommen, mittels Pumpe 26 und Wärmeaustauscher 27 auf Extraktionsbedingungen von Druck und Temperatur gebracht und dem Extraktionsautoklaven 1 kopfseitig zugeführt. Im Extraktionsbehälter 1 wird dem Einsatzprodukt das Lösungsmittel aus Leitung 19 entgegengeführt, das in Wärmeaustauschern 16 und 18 und im Kompressor 17 auf die Extraktionstemperatur bzw. den Extraktionsdruck eingestellt worden ist und das im Extraktionsbehälter 1 den Extrakt aufnimmt. Die mit dem Extrakt beladene Lösungsmittelphase gelangt über die Leitung 3, 7 und 11 in die Abscheider 6, 10 und 14. Der Extraktionsrückstand wird über Leitung 20 aus dem Extraktionsbehälter 1 abgeführt. Mittels eines eingebauten Wärmeaustauschers 2 wird ein geringer Rückfluß erzeugt und so die Trennschärfe der Extraktionsstufe verbessert. In den Abscheidern 6, 10 und 14 werden Extraktfraktionen, die über die Leitungen 21, 22 und 23 entnommen werden, durch jeweilige Änderung der Dichte der Lösungsmittelphase abgeschieden. Die Abscheidebedingungen werden mittels Druckregelventilen 4, 8 und 12 und über eine Leitung 15 angeschlossenen Druckregler 31 sowie Wärmeaustauscher 5, 9 und 13 eingestellt. Die Lösungsmittelverluste werden dadurch ausgeglichen, daß frisches Lösungsmittel aus dem Lösungsmittelbehälter 28 über Leitung 29 und Pumpe 30 in den Verfahrenskreislauf gelangt.

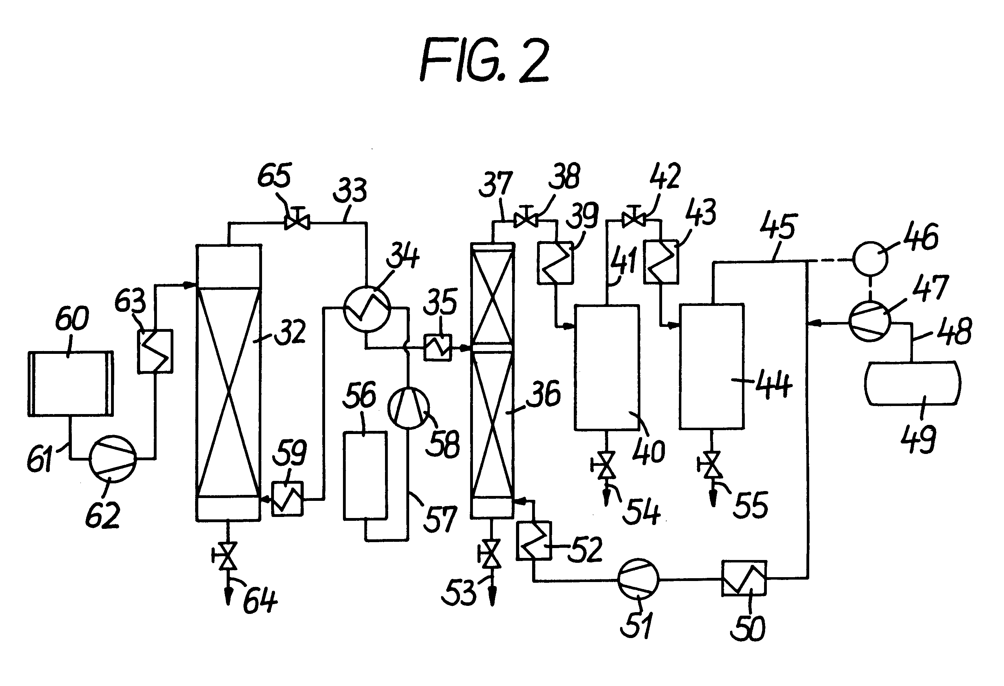

In Fig. 2 wird das Einsatzprodukt über Leitung 61 dem thermostatisierbaren Vorratsbehälter 60 entnommen, mittels Pumpe 62 und Wärmeaustauscher 63 auf Extraktionsbedingungen von Druck und Temperatur gebracht und dem Extraktionsautoklaven 32 kopfseitig zugeführt. Im Extraktionsbehälter 32 wird dem Einsatzprodukt das überkritische Wasser entgegen geführt, das dem Wasservorratsbehälter 56 über eine Leitung 57 entnommen wird und in den Wärmeaustauscher 34 und 59 und im Kompressor 58 auf die Extraktionstemperatur bzw. den Extraktionsdruck eingestellt worden ist und das im Extraktionsbehälter 32 den Extrakt aufnimmt. Die mit dem Extrakt beladene Lösungsmittelphase gelangt über Leitung 33, Wärmeaustauscher 34 und 35 in die nachgeschaltete Abscheidekolonne 36. Der Extraktionsrückstand wird über Leitung 64 aus dem Extraktionsbehälter 32 abgeführt. Das nach Druckreduzierung mittels Druckregelventil 65 und Temperaturerniedrigung in den Wärmetauschern 34 und 35 verflüssigte Gemisch aus Extrakt und Wasser wird in der Kolonne 36 im Gegenstrom mit einem überkritischen Kohlenwasserstoff oder einem überkritischen Kohlenwasserstoffgemisch extrahiert. Die mit zumindest einem Teil des Extrakts beladene überkritische Lösungsmittelphase gelangt über die Leitungen 37 und 41 in die Abscheider 40 und 44. Die wässrige Phase und ggf. ein Teil des aus Extraktionsbehälter 32 gewonnenen Extrakts werden über Leitung 53 aus der Kolonne 36 kontinuierlich abgezogen. In den Abscheidern 40 und 44 werden Extraktfraktionen durch Änderung der Dichten der Lösungsmittelphase abgeschieden, die über die Leitungen 54 und 55 entnommen werden. Die Abscheidebedingungen werden mittels Regelventilen 38 und 42, über eine Leitung 45 angeschlossenen Druckregler 46 sowie Wärmeaustauscher 39 und 43 eingestellt. Die Lösungsmittelverluste werden dadurch ausgeglichen, daß frisches Lösungsmittel aus dem Lösungsmittelbehälter 49 über Leitung 48 und Pumpe 47 in den Verfahrenskreislauf gelangt. Das den letzten Abscheider gasförmig verlassende Lösungsmittel wird, nach einer eventuellen Verflüssigung im Wärmeaustauscher 52 auf Extraktionsbedingungen gebracht und der Kolonne 36 erneut unten zugeführt.

Beispiel 1

Steinkohlenteerpech ist bei kontinuierlicher Betriebsweise nach dem Verfahrensschema in Fig. 1 mit Propan, Petroläther und Wasser extrahiert worden. Das eingesetzte Steinkohlenteerpech hatte einen Erweichungspunkt von 71 ° C, einen Aschegehalt von 0,20 Gew.-% sowie 20,1 Gew.-% toluolunlösliche und 6,5 Gew.-% chinolinunlösliche Bestandteile.

Weiterhin hatte das eingesetzte Steinkohlenteerpech folgende Elementaranalyse, bezogen auf wasser- und aschefreie Substanz: 91,6 Gew.-% C, 4,5 Gew.-% H, 0,8 Gew.-% O, 1,0 Gew.-% N, 0,7 Gew.-% S. Tabelle 1 enthält die eingestellten Versuchsparameter und die erzielten Ausbeuten. In Tabelle 2 sind die ermittelten analytischen Werte für den Extrakt und den Rückstand in den Versuchen 1 bis 3 zusammengestellt. Für die Lösungsmittel Petroläther und Wasser wird eine wesentlich höhere Ausbeute als nach dem Stand der Technik bekannt erreicht.

**Beispiel 2**

Mit der vorstehend angegebenen Zusammensetzung ist Steinkohlenteerpech kontinuierlich mit Petroläther (Siedebereich 40 ° C/70 ° C) extrahiert worden, wobei 500 g/h Steinkohlenteerpech und 6 kg/h Lösungsmittel, entsprechend einem Lösungsmittelverhältnis von 12 kg Lösungsmittel/kg Steinkohlenteerpech, eingesetzt worden sind. Die Kopftemperatur der Extraktionskolonne betrug 250 ° C die Sumpftemperatur betrug 280 ° C. Oberhalb des Sumpfes nahm die Temperatur linear mit der Höhe ab. Die Abscheidung erfolgte einstufig bei 1 bar und 85 ° C, wobei 32,6 Gew.-% vom Einsatz als rotbrauner, bei Raumtemperatur (20 ° C) gerade noch zähflüssiger Extrakt erhalten wurde. Der Extrakt hatte unter 0,01 Gew.-% Asche, 0,1 Gew.-% Toluolunlösliches und 0,1 Gew.-% Chinolinunlösliches.

Der Extraktionsrückstand war unter den Extraktionsbedingungen noch zähflüssig und konnte kontinuierlich aus der Kolonne abgezogen werden. Die Analysendaten dieses Rückstands sind in Tabelle 3 zusammengestellt. Aufgrund seiner günstigen physikalischen Eigenschaften besteht für diesen Rückstand z. B. eine großtechnische Einsatzmöglichkeit als Bindemittel bei der Herstellung von Formkoks für Giessereizwecke.

**Beispiel 3**

Nach dem Verfahrensschema in Fig. 1 ist ein Hopfenrohextrakt fraktioniert worden. Der verwendete Hopfenextrakt ist durch Extraktion von trockenem Hopfen mit Ethanol gewonnen worden und enthielt unter 0,1 % Ethanol, 5,2 % Wasser, 74,9 % Weichharz und 14,1 % Hartharz. Der auf Extraktionsbedingungen von 90 ° C (Eintrittstemperatur am Kolonnenkopf) und 300 bar gebrachte Hopfenrohextrakt wurde einer mit Füllkörpern befüllten Kolonne (Höhe x Innendurchmesser 6000 x 59 mm) kopfseitig mit einem Massendurchsatz von 800 g/h zugeführt. Das der Kolonne mit einem Massendurchsatz von 20 kg/h unten mit einer Temperatur von 160 °C zugeführte überkritische Kohlendioxid strömt dem herabfließenden Hopfenextrakt entgegen und belädt sich dabei bevorzugt mit den Hopfenölen und Weichharzen. Die beladene überkritische Phase ist stufenweise in den nachgeschalteten Abscheidern entspannt worden. Die Extraktions- und Abscheidebedingungen sind wie folgt eingestellt worden:

|  | Extraktion | Abscheidung | | |
|---|---|---|---|---|
|  |  | A$_1$ | A$_2$ | A$_3$ |
| Druck, bar | 300 | 210 | 120 | 70 |
| Temperatur °C |  | 70 | 52 | 40 |
| Kolonnenkopf | 90 |  |  |  |
| Kolonnensumpf | 160 |  |  |  |

Zum besseren Ausschleusen des Extraktionsrückstands, der hauptsächlich aus Hartharzen, Chlorophyll, Zuckern und Gerbstoffen bestand, ist der Kolonnensumpf auf 160 °C beheizt und in den untersten Schuß des Sumpfes Wasser mit 120 °C gepumpt worden. Der als 1. Fraktion abgeschiedene Extrakt enthielt noch Verunreinigungen, wie Chlorophyll, Oxidationsprodukte und die bereits im überkritischen $CO_2$ gelösten Hartharze. Die Hauptmenge des Extrakts, die Weichharzfraktion wurde in der 2. und 3. Fraktion abgeschieden. Die erzielten Ausbeuten und die analytischen Daten des eingesetzten Hopfenrohextrakts, des Extraktionsrückstands und der einzelnen Extraktfraktionen sind in Tabelle 4 zusammengefaßt. 95,9 % der eingesetzten Bitterstoffe und praktisch alle Alphasäuren befinden sich in den 2. und 3. Extraktfraktionen.

Tabelle 1:

| V.-Nr. | Lösungsmittel | Extraktion $T_{Ex}$, °C Kopf | Extraktion $T_{Ex}$, °C Sumpf | $p_{Ex}$, bar | Abscheidung $T_{Ab}$, °C | Abscheidung $p_{Ab}$, bar | Lösungsmittelverhältnis kg Lösungsmittel/kg Einsatz | Ausbeute in Gew.-% vom Einsatz |
|---|---|---|---|---|---|---|---|---|
| 1 | Propan | 130 | 230 | 250 | 60 | 10 | 60,2 | 20,5 |
| 2 | Petroläther | 250 | 280 | 250 | 85 | 1 | 12,0 | 32,6 |
| 3 | Wasser | 410 | 410 | 300 | 100 | 1 | 10,0 | 64,3 |

Tabelle 2:

| | Versuch 1 Extrakt | Versuch 1 Rückstand | Versuch 2 Extrakt | Versuch 2 Rückstand | Versuch 3 Extrakt | Versuch 3 Rückstand |
|---|---|---|---|---|---|---|
| Aschegehalt, Gew.-% | 0,0 | 0,26 | < 0,01 | 0,30 | 0,02 | 0,58 |
| Toluolunlösliches, Gew.-% | 0,0 | 25,1 | 0,1 | 52,6 | 2,0 | 79,0 |
| Chinolinunlösliches, Gew.-% | 0,0 | 7,4 | 0,1 | 13,7 | 0,2 | 58,9 |

Tabelle 3

| Analysendaten des Steinkohlenteerpechextraktionsrückstands von Versuch Nr. 2 | |
|---|---|
| Erweichungspunkt | 180 °C |
| Conradson-Wert | 77.0 |
| Kurzanalyse (K.A.) | |
| Wasser % | - |
| Asche (wasserfrei = wf) % | 0,5 |
| Fl. Bestandt. (wasser- und aschefrei = waf) % | 35,1 |
| Elementaranalyse (E.A.) | |
| C (waf) % | 93,32 |
| H (waf) % | 4,25 |
| Massenbilanz der extraktiven Zerlegung | |
| Xylolextraktion | |
| 58,3 % xylolunlöslich | |
| K.A. | |
| Wasser % | 1,8 |
| Asche (wf) % | 1,0 |
| Fl. Bestandt. (waf) % | 16,7 |
| E.A. | |
| C (waf) % | 91,32 |
| H (waf) % | 3,84 |
| 41,7 % xylollöslich | |
| K.A. | |
| Wasser % | 0,8 |
| Asche (wf) % | 0,1 |
| Fl. Bestandt. (waf) % | 58,1 |
| E.A. | |
| C (waf) % | 91,89 |
| H (waf) % | 4,71 |
| Petrolätherextraktion der xylollöslichen Fraktion | |
| 36,9 % petroätherunlöslich (bezogen auf den Ausgangsextrakt) | |
| K.A. | |
| Wasser % | - |
| Asche (waf) % | 0,1 |
| Fl. Bestandt. (waf) % | 52,7 |
| E.A. | |
| C (waf) % | 91,74 |
| H (waf) % | 4,87 |
| 4,8 % petrolätherlöslich | |
| E.A. | |
| C (waf) % | 91,44 |
| H (waf) % | 5,25 |

Tabelle 4:

| | Einsatz | Rückstand | Extrakt | | |
| | | | 1. Fraktion | 2. Fraktion | 3. Fraktion |
|---|---|---|---|---|---|
| Ausbeute, Gew.-% | 100 | 17,8 | 1,7 | 54,2 | 26,3 |
| Konduktometerwert, % | 39,75 | 20,4 | 31,0 | 52,48 | 40,06 |
| Alpha-Säuren, % | 35,55 | 0,92 | 26,45 | 52,01 | 39,07 |
| ISO-Alphasäuren, % | 3,45 | 11,87 | 1,90 | 1,70 | 3,50 |
| KBW, % | 41,50 | 20,86 | 31,95 | 53,33 | 41,80 |
| Alpha + ISO, % | 38,0 | 12,79 | 28,35 | 53,70 | 42,57 |

**Patentansprüche**

1. Verfahren zur kontinuierlichen Extraktion von hoch- bzw. nichtsiedenden aber schmelzenden organischen Stoffgemischen mit mindestens einem Lösungsmittel aus der Gruppe $CO_2$, Propan, Butan,

8

Pentan, Petroläther, Wasser bei einer Temperatur T von T > $T_k$($T_k$ = kritische Temperatur) und einem Druck p von p > $p_k$ ($p_k$ = kritischer Druck),

**dadurch gekennzeichnet,**

daß der Druck p < 400 bar ist und daß über der Extraktionskolonne ein Temperaturprofil herrscht, wobei die Temperatur im Abtriebsteil der Kolonne so tief eingestellt wird, daß eine optimale Lösung der zu extrahierenden Komponenten im Lösungsmittel gewährleistet ist, hingegen im Verstärkerteil der Kolonne die Temperatur so hoch eingestellt wird, daß sich aus dem Kolonnensumpf noch kontinuierlich pastöser Extraktionsrückstand abziehen läßt.

2. Verfahren zur kontinuierlichen Extraktion von Kohle- oder Erdöl-Produkten mit mindestens einem überkritischen Kohlenwasserstoff mit drei bis fünf C-Atomen als Lösungsmittel, dadurch gekennzeichnet, daß der Druck p < 400 bar ist und daß über der Extraktionskolonne ein Temperaturprofil herrscht, wobei die Temperatur im Abtriebsteil der Kolonne so tief eingestellt wird, daß eine optimale Lösung der zu extrahierenden Komponenten im Lösungsmittel gewährleistet ist, hingegen im Verstärkerteil der Kolonne die Temperatur so hoch eingestellt wird, daß sich aus dem Kolonnensumpf noch kontinuierlich pastöser Extraktionsrückstand abziehen läßt.

3. Verfahren zur kontinuierlichen Herstellung von Pflanzenextrakten, z. B. Hopfenextrakt mit überkritischem $CO_2$ oder überkritischem Propan oder einem Gemisch aus diesen beiden Gasen als Lösungsmittel, dadurch gekennzeichnet, daß der Druck p < 400 bar ist und daß über der Extraktionskolonne ein Temperaturprofil herrscht, wobei die Temperatur im Abtriebsteil der Kolonne so tief eingestellt wird, daß eine optimale Lösung der zu extrahierenden Komponenten im Lösungsmittel gewährleistet ist, hingegen im Verstärkerteil der Kolonne die Temperatur so hoch eingestellt wird, daß sich aus dem Kolonnensumpf noch kontinuierlich pastöser Extraktionsrückstand abziehen läßt.

4. Verfahren nach den Ansprüchen 1 bis 3, dadurch gekennzeichnet, daß der Extraktionsrückstand nach dem Entgasen eine Erweichungstemperatur von mindestens 120 °C aufweist.

5. Verfahren nach den Ansprüchen 1 bis 3, dadurch gekennzeichnet, daß der Extraktionsrückstand nach dem Entgasen eine Erweichungstemperatur von 150 °C bis 220 °C aufweist.

6. Verfahren nach den Ansprüchen 1 bis 5, dadurch gekennzeichnet, daß der Extraktionskolonne Wasser zugesetzt wird.

7. Verfahren nach den Ansprüchen 1 bis 6, dadurch gekennzeichnet, daß dem Lösungsmittel oder dem Lösungsmittelgemisch bis zu 20 Gew.-% Schleppmittel, wie z.B. Toluol, zugesetzt werden.

8. Verfahren nach Anspruch 2, dadurch gekennzeichnet, daß Wasser als Lösungsmittel verwendet wird und daß die beladene fluide Phase einstufig entspannt wird und zumindest ein Teil des Extrakts aus dem abgeschiedenen Gemisch Wasser/Extrakt mit einem überkritischen Kohlenwasserstoff oder einem überkritischen Kohlenwasserstoffgemisch wieder extrahiert wird und in nachgeschalteten Abscheider fraktioniert abgeschieden wird.

9. Verfahren nach Anspruch 8, dadurch gekennzeichnet, daß als überkritische Kohlenwasserstoffe mindestens ein Stoff der Gruppe Propan, n-Butan, iso-Butan bei einer Temperatur von 150 °C bis 400 °C und einem Druck von 300 bar > p > $p_k$ verwendet wird.

10. Verfahren nach dem Anspruch 6, dadurch gekennzeichnet, daß dem Wasser Stoffe zur Verbesserung der Benetzungsfähigkeit zugefügt werden.

11. Verfahren nach den Ansprüchen 1 bis 3, dadurch gekennzeichnet, daß der Extrakt in nachgeschalteten Abscheidern fraktioniert wird und daß die erste Fraktion in den Extraktionsprozeß zurückgeführt oder gesondert verarbeitet wird.

12. Verfahren nach Anspruch 3, dadurch gekennzeichnet, daß dem Lösungsmittel n-Butan, iso-Butan oder Äthanol als Schleppmittel zugesetzt wird.

13. Verfahren nach den Ansprüchen 1 bis 3, dadurch gekennzeichnet, daß das Lösungsmittel im Kreislauf gefahren wird.

## Claims

1. A process for the continuous extraction of mixtures of high-boiling or non-boiling but melting organic substances with at least one solvent from the group formed by $CO_2$, propane, butane, pentane, petroleum ether, water at a temperature T of $T > T_k$ ($T_k$ = critical temperature) and a pressure p of $p > P_k$ (Pk = critical pressure, characterized in that the pressure p is < 400 bar and a temperature profile extends over the extraction column, the temperature in the stripping section of the column being adjusted so low as to ensure optimum dissolution of the components to be extracted in the solvent, while in the intensifying portion of the column the temperature is adjusted so high that continuously pasty extraction residue can still be drawn off from the column sump.

2. A process for the continuous extraction of coal or oil products with at least one supercritical hydrocarbon having three to five C atoms as solvent, characterized in that the pressure is < 400 bar and a temperature profile extends over the extraction column, the temperature in the stripping section of the column being adjusted so low as to ensure optimum dissolution of the components to be extracted in the solvent, while in the intensifying portion of the column the temperature is adjusted so high that continuously pasty extraction residue can still be drawn off from the column sump.

3. A process for the continuous production of plant extracts, for example, hop extract with supercritical $CO_2$ or supercritical propane or a mixture of said two gases as the solvent, characterized in that the pressure is < 400 bar and a temperature profile extends over the extraction column, the temperature in the stripping section of the column being adjusted so low as to ensure optimum dissolution of the components to be extracted in the solvent, while in the intensifying portion of the column the temperature is adjusted so high that continuously pasty extraction residue can still be drawn off from the column sump.

4. A process according to claims 1 to 3, characterized in that after degasification the extraction residue has a softening temperature of at least 120°C.

5. A process according to claims 1 to 3, characterized in that after degasification the extraction residue has a softening temperature of 150°C to 220°C.

6. A process according to claims 1 to 5, characterized in that water is added to the extraction column.

7. A process according to claims 1 to 6, characterized in that up to 20% by weight of an entrainer such as, for example, toluene, is added to the solvent or mixture of solvents.

8. A process according to claim 2, characterized in that water is used as the solvent, the charged fluid phase is expanded in one stage, and at least a proportion of the extract is again extracted from the separated water/extract mixture with a supercritical hydrocarbon or a supercritical mixture of hydrocarbons and separated fractioned in a connected separator.

9. A process according to claim 8, characterized in that the supercritical carbon used is at least one substance from the group formed by propane, n-butane, isobutane at a temperature of 150°C to 400°C and a pressure of 300 bar > p > $p_k$.

10. A process according to claim 6, characterized in that substances for improving wettability are added to the water.

11. A process according to claims 1 to 3, characterized in that the extract is fractioned in connected separators and the first fraction is returned to the extraction process or processed separately.

12. A process according to claim 3, characterized in that n-butane, isobutane or ethanol is added as an entrainer to the solvent.

13. A process according to claims 1 to 3, characterized in that the solvent is cycled.

**Revendications**

1. Procédé d'extraction en continu de mélanges de matières organiques respectivement à point d'ébullition élevé ou non évaporables mais fusibles, avec au moins un solvant du groupe $CO_2$, propane, butane, pentane, ether de pétrole, eau, à une température T, avec $T > T_k$ ($T_k$ = température critique), et à une pression p, avec $p > p_k$ ($p_k$ = pression critique),
    caractérisé en ce que la pression est $p < 400$ bar et en ce que, sur la colonne d'extraction, règne un profil de températures d'après lequel la température, dans la zone de soutirage de la colonne, est réglée assez bas pour assurer une dissolution optimale, dans le solvant, des composants à extraire, et d'après lequel, par contre, la température, dans la partie concentration de la colonne, est réglée assez haut pour qu'on puisse encore soutirer, en continu, du puisard de la colonne, un résidu d'extraction pâteux.

2. Procédé d'extraction en continu de produits houillers ou pétroliers, avec, comme solvant, au moins un hydrocarbure hypercritique comportant trois à cinq atomes de carbone, caractérisé en ce que la pression est $p < 400$ bar et en ce que, sur la colonne d'extraction, règne un profil de températures d'après lequel la température, dans la zone de soutirage de la colonne, est réglée assez bas pour assurer une dissolution optimale, dans le solvant, des composants à extraire, et d'après lequel, par contre, la température, dans la partie concentration de la colonne, est réglée assez haut pour qu'on puisse encore soutirer, en continu, du puisard de la colonne, un résidu d'extraction pâteux.

3. Procédé pour la fabrication en continu d'extraits de plantes, par exemple de l'extrait de houblon, avec, comme solvant, du $CO_2$ hypercritique, ou du propane hypercritique, ou un mélange de ces deux gaz, caractérisé en ce que la pression est $p < 400$ bar et en ce que, sur la colonne d'extraction, règne un profil de températures d'après lequel la température, dans la zone de soutirage de la colonne, est réglée assez bas pour assurer une dissolution optimale, dans le solvant, des composants à extraire, et d'après lequel, par contre, la température, dans la partie concentration de la colonne, est réglée assez haut pour qu'on puisse encore soutirer, en continu, du puisard de la colonne, un résidu d'extraction pâteux.

4. Procédé suivant les revendications 1 à 3, caractérisé en ce que le résidu d'extraction présente, après le dégazage, une température de ramollissement d'au moins 120°C.

5. Procédé suivant les revendications 1 à 3, caractérisé en ce que le résidu d'extraction présente, après le dégazage, une température de ramollissement de 150°C à 220°C.

6. Procédé suivant les revendications 1 à 5, caractérisé en ce que de l'eau est ajoutée dans la colonne d'extraction.

7. Procédé suivant les revendications 1 à 6, caractérisé en ce qu'au solvant, ou au mélange de solvants, est ajouté jusqu'à 20 % en poids d'agent d'entraînement, par exemple du toluol.

8. Procédé suivant la revendication 2, caractérisé en ce que de l'eau est utilisée comme solvant, et en ce qu'on détend en un étage la phase fluide chargée, et qu'on procède de nouveau à l'extraction d'au moins une partie de l'extrait, à partir du mélange décanté eau/extrait, au moyen d'un hydrocarbure hypercritique, ou d'un mélange d'hydrocarbures hypercritiques, et que cette partie est décantée de façon fractionnée dans un décanteur branché en aval.

9. Procédé suivant la revendication 8, caractérisé en ce que, comme hydrocarbures hypercritiques, on utilise au moins un produit du groupe propane, n-butane, isobutane, sous une température de 150°C à 400°C et sous une pression p telle que 300 bar $< p < p_k$.

10. Procédé suivant la revendication 6, caractérisé en ce qu'à l'eau sont ajoutés des produits pour améliorer la capacité de mouillage.

11. Procédé suivant les revendications 1 à 3, caractérisé en ce que l'on fractionne l'extrait dans des décanteurs branchés en aval et en ce que la première fraction est renvoyée dans le process d'extraction ou fait l'objet d'un traitement particulier.

12. Procédé suivant la revendication 3, caractérisé en ce qu'on ajoute au solvant du n-butane, de l'isobutane ou de l'éthanol comme agent d'entraînement.

13. Procédé suivant les revendications 1 à 3, caractérisé en ce qu'on fait circuler le solvant en cercle fermé.

# FIG.1

EP 0 320 813 B1

FIG. 2